(19) **Europäisches Patentamt**
**European Patent Office**
**Office européen des brevets**

(11) **EP 2 299 237 A2**

(12) # EUROPEAN PATENT APPLICATION

(43) Date of publication:
**23.03.2011 Bulletin 2011/12**

(51) Int Cl.:
*G01B 21/04* (2006.01)   *H01L 21/68* (2006.01)

(21) Application number: **10009314.5**

(22) Date of filing: **08.09.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **14.09.2009 KR 20090086527**

(71) Applicant: **Soonhan Engineering Corp.
Jungwon-Gu
Sungnam-City
Kyungki do 482-806 (KR)**

(72) Inventor: **Ko, Byoung gwan
Songpa-gu, Seoul 138-863 (KR)**

(74) Representative: **Hofmann, Ernst
Dr. Johannes Heidenhain GmbH,
Patentabteilung,
Postfach 12 60
83292 Traunreut (DE)**

(54) **Gantry stage orthogonality error measurement method and error compensation method**

(57)     The present invention relates to a Gantry stage orthogonality error measurement method and error compensation method for homing processing: more specifically, it relates to a Gantry stage orthogonality error measurement method and error compensation method for homing processing with an enhanced level of homing processing repeatability and a capability for minimizing orthogonality errors at the time of Gantry stage homing processing used with semiconductors, FPD equipment or precision machining equipment (Fig. 4).

FIGURE 1

FIGURE 4

**Description**

The present invention relates to a Gantry stage orthogonality error measurement method and an error compensation method.

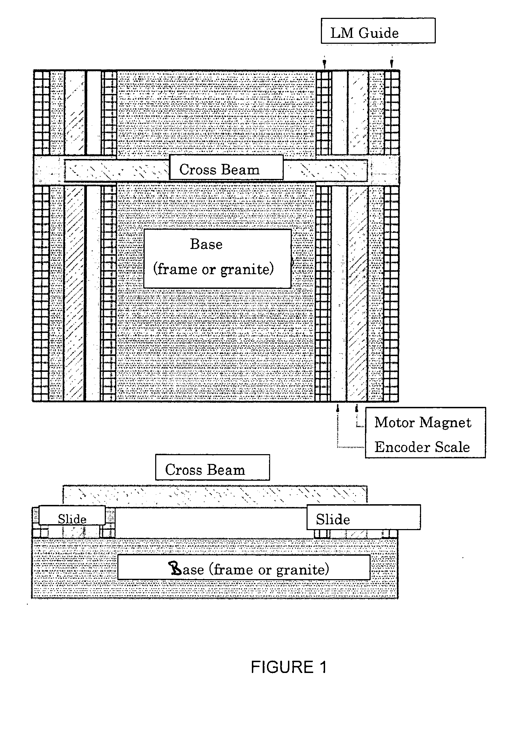

Generally speaking, as depicted in Figure 1, a Gantry stage utilized in semiconductors, FPD (Flat Panel Display) equipment or precision machining equipment respectively supports two linear encoders and two motors for detecting two linear motors and respective motor positions that are arranged in a parallel manner and are driven in a unified manner in the direction of the feed shaft, and includes an LM (linear motion) guide for assisting movement and a cross beam that mechanically fastens and connects two linear motors. In attempting to carry out product manufacturing or operations by driving such Gantry stage, after the motor standard or starting position (also referred to as homing processing) is preferentially set, the set position then set as the standard coordinate, and the requisite feed order for the work process is given. Consequently, the degree of precision of the homing processing position and of the repeatability of homing processing becomes capable of significantly affecting the work performance of the stage as well as product quality.

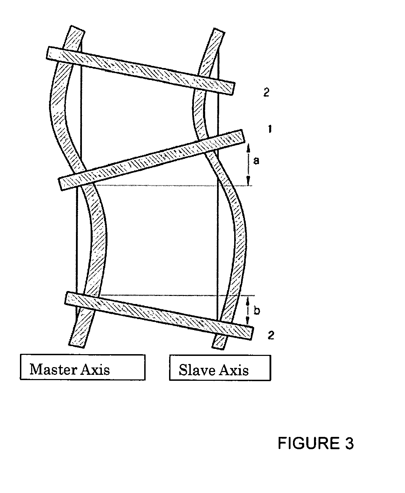

The two separate linear motors in the Gantry stage move according to respective LM guide surfaces. In such case, the setting of two LM guides so as to maintain a perfectly horizontal position becomes substantially impossible when design, processing and assembly tolerances are considered. According to the assembly conditions of the LM guide, the positions of linear motor 1 (referred to as master axis) and linear motor 2 (referred to as slave axis) are placed in twisted positions in an orthogonal direction as far as a or b relative to the drive direction of the Gantry stage, as illustrated in Figure 3, and these error values are further increased as the size of the stage increases. According to the direction of the LM guide in which the positions of the master and slave axes are located, orthogonality errors occur in an irregular manner, and such orthogonality errors decrease the degree of repeatability of the homing processing of the stage. As seen from a structural standpoint, in the event that the orthogonality errors become severe, modifications to the stage are caused when driving is conducted for long periods. Moreover, from a maintenance/conservation standpoint, the level of wear of each stage component is aggravated and longevity is reduced, thereby increasing maintenance/conservation costs. When seen from a product productivity standpoint, decreased productivity due to an increase in the number of product defects is caused. Consequently, an appropriate compensation method is required in order to minimize orthogonality errors that occur at the time of homing processing.

In order to compensate for orthogonality errors, the size of the orthogonality errors must be measured as a priority.

In general, when a precise position is measured, a laser interferometer is used. As a method for measuring orthogonality errors, such measurement may be conducted by measuring the diagonal length by two laser interferometers, and by then calculating the difference of the two values. However, if this method is used, such use will necessitate excessive cost and time, and operators will experience errors in installation as well as measurement relative to the laser interferometers.

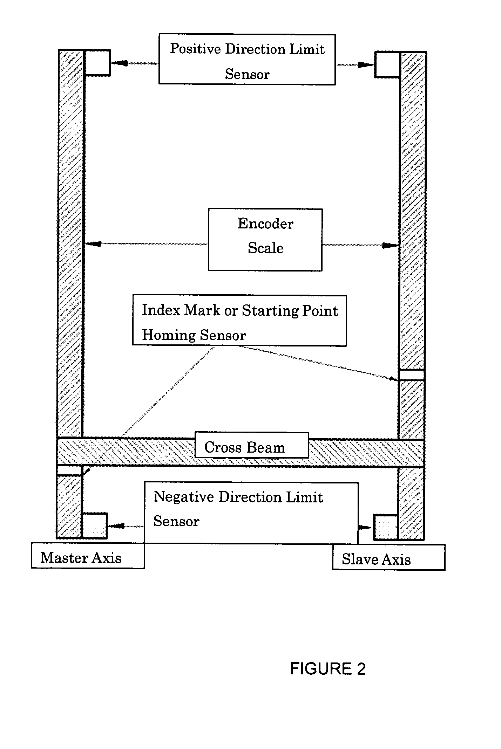

Another method for measuring orthogonality errors, as illustrated in Figure 2, uses linear encoders and sensors for homing processing or linear encoder index signals that are respectively positioned on the master axis and slave axis. The motors of the master axis and slave axis are respectively caused to move from the limit sensor in the negative direction of the stage towards the positive direction as far as the index position of the first linear encoder or position of the sensor for homing processing. Subsequently, the linear encoder is used to measure the position, and the difference value of the measured value is calculated, thereby providing measurement of orthogonality errors.

Following homing processing, the Gantry stage orthogonality error compensation method either causes the motor on the opposite side to move under conditions in which one axis of the motor is fixated as far as the orthogonality value measured according to the above explanation, or else the two motors are both driven as far as the error value, to achieve the compensation effect.

It is an object of the invention to provide an improved method for a Gantry stage orthogonality error measurement.

The Gantry stage orthogonality error measurement method and error compensation method for homing processing according to the present invention is characterized by comprising the following steps: a step in which the current motor positions of the master axis and slave axis of the Gantry stage that structurally match an orthogonality are respectively stored; a step in which the motors on the master and slave axis are concurrently driven at low speed in the negative direction (or positive direction) and the limit sensor position in the negative direction (or positive direction) is detected; a step in which, when the motors arrive at the limit sensor position in the negative direction (or positive direction), the motors are caused to stop, and are then driven again simultaneously at low speed in the positive direction (or negative direction), while at the same time the homing sensors of the master axis and slave axis or the first index signal of the encoder are respectively monitored; a step in which, when the homing sensors of the master axis and slave axis or the first index signal of the encoder are detected, the position values of the motors that have detected the absolute position of the homing sensors of the master axis and slave axis or the first index signal of the encoder are stored; and a step in which the stored position value of the motors is used to calculate the distance from the point at which the motors began to move to the position at which the sensor position was detected, the difference in the two calculated distance values is again calculated, and this value is then determined to constitute the standard absolute position value of the homing sensor equipped on the Gantry stage; and when these steps are completed, this value is used as the absolute standard position of the homing sensor relative to the orthogonality error at the time of homing processing.

Moreover, the inventive method is characterized by conducting the following steps: a step is conducted in which a servo amp of the slave axis is maintained in a prerun state, and thereafter only the motor of the master axis is used for driving at slow speed in the negative direction (or positive direction) and the limit sensor position in the negative direction (or positive direction) is detected; a step is conducted in which, when the motor reaches the limit sensor position in the negative direction (or positive direction), the motor is caused to stop, and is then again simultaneously driven at slow speed in the positive direction (or negative direction) while the sensor for homing processing or the encoder first index signal on the master axis is monitored; a step is conducted in which, when the sensor for homing processing or the encoder first index signal on the master axis is detected, the sensor for homing processing or the encoder first index signal on the master axis is measured and stored; a step is conducted in which the motor is caused to move to the position of the sensor for homing processing or the encoder first index signal on the master axis and this position is then set as the starting point; a step is conducted in which a servo amp of the master axis is maintained in a prerun state, and thereafter only the motor of the slave axis is used for driving at slow speed in the negative direction (or positive direction) and the limit sensor position in the negative direction (or positive direction) is searched for; a step is conducted in which, when the motor reaches the limit sensor position in the negative direction (or positive direction), the motor is caused to stop, and is then again simultaneously driven at slow speed in the positive direction (or negative direction) while the sensor for homing processing or the encoder first index signal on the slave axis is monitored; a step is conducted in which, when the sensor for homing processing or the encoder first index signal on the slave axis is detected, the position of the sensor for homing processing or the encoder first index signal on the slave axis is measured and stored; a step is conducted in which the motor is caused to move to the position of the sensor for homing processing or the encoder first index signal on the slave axis and this position is then set as the starting point; a step is conducted in which the master axis and slave axis are respectively sent to the starting positions; and a step is conducted wherein the slave axis is offset-driven as far as the measured absolute position, the starting point is then set or else the master axis is offset-driven as far as the absolute position, and both axes are thereafter simultaneously sent to the starting position.

In addition, the method is characterized wherein, when homing to the starting position is conducted, detection of the position of the limit sensor in the negative direction (or positive direction) and detection of the homing sensors of the master axis and slave axis or the first index signal of the encoder simultaneously drive and detect the Gantry stage.

Further, the method is characterized wherein, in the stage in which the detected orthogonality error is compensated for, the motors in the master axis and the slave axis are respectively driven in a simultaneous manner 1/2 each for the error that needs to be compensated, and the orthogonality error is compensated for.

Moreover, the method is characterized wherein, when a motion control device (by Motion Engineering, Inc.; MEI) is used, in the step in which a comparison is made with the measured absolute position and the slave axis is offset-driven as far as the difference value, the slave axis is only driven 1/2 of the orthogonality error value having to be compensated for, the master axis is then sent to the index position of the sensor for homing processing or encoder, and the orthogonality error is compensated for.

Example embodiments of the present invention provide a Gantry stage orthogonality error measurement method and error compensation method for homing processing with an enhanced level of homing processing repeatability and a capability for minimizing orthogonality errors at the time of Gantry stage homing processing used with, e.g., semiconductors, FPD equipment or precision machining equipment.

Example embodiments of the present invention address the problems related to the Gantry stage orthogonality errors described above. The purpose is, for example, to provide a Gantry stage orthogonality error measurement method and error compensation method for homing processing that uses two linear encoders and two sensors for homing processing or the index position of the linear encoder (respectively set on the master axis and slave axis of the Gantry stage) to measure the orthogonality position error relative to the structurally twisted driving direction of the two motors, thereby providing compensation for such errors.

As noted above, the Gantry stage orthogonality error measurement method and error compensation method for homing processing is capable of obtaining the following effects.

First, although expensive equipment such as a laser interferometer, absolute position encoder or laser displacement sensor must typically be used in order to measure Gantry stage orthogonality errors, in example embodiments of the present invention encoders and homing processing sensors that are set on the stage are used, thereby providing a reduction in manufacturing costs.

Second, Gantry stage orthogonality errors change in an irregular manner according to where the Gantry axis is placed or when the servo amp is turned on/off. Consequently, the level of repeatability of homing processing also changes. The level of repeatability of homing processing is an important component of indicating the level of performance of the Gantry stage, and this level of homing processing repeatability is able to be improved by the measures described herein.

Third, when the Gantry stage is driven under conditions in which orthogonality errors exist, motor drive characteristics such as the speed ripple, fixation time and level of position precision change with each position according to the conditions of assembly parallelity of the two LM guides on the master axis and slave axis. In the method described herein, such changing characteristics are minimized.

Fourth, when the Gantry stage is driven under conditions in which orthogonality errors exist, frictional force is increased according to the conditions of assembly parallelity of the two LM guides on the master axis and slave axis. Consequently, when the level of wear of the equipment accumulates and becomes severe, the equipment is transformed and the longevity of each element component is reduced. Accordingly, when the method hereof is used, maintenance/conservation costs may be reduced, which is advantageous.

Fifth, if orthogonality errors are minimized when a Gantry stage is used to produce a product, product quality is enhanced and defects are reduced. Consequently, a high level of productivity may be achieved, which is advantageous.

Further features and aspects of example embodiments of the Gantry stage orthogonality error measurement method and error compensation method for homing processing are described in more detail below with reference to the appended Figures.

| Figure 1 | schematically illustrates a conventional Gantry stage. |
|---|---|
| Figure 2 | schematically illustrates the sensor position and axis structure of the Gantry stage illustrated in Figure 1. |
| Figure 3 | illustrates an instance of the occurrence of an orthogonality error in a conventional Gantry stage. |
| Figure 4 | is a block diagram of the equipment for controlling homing processing relative to Gantry stage orthogonality error measurement and error compensation according to an example embodiment of the present invention. |
| Figures 5a to 5C | illustrate the sequence followed in measuring the absolute position of the Gantry stage sensors according to an example embodiment of the present invention. |
| Figure 6 | illustrates the orthogonality position offset sign of the Gantry stage according to an example embodiment of the present invention. |
| Figures 7a and 7b | illustrate the sequence followed in the method for homing processing relative to Gantry stage orthogonality error compensation according to an example embodiment of the present invention. |
| Figure 8 | illustrates the Gantry control algorithm provided in the motion control device (by Motion Engineering, Inc.; MEI). |
| Figure 9 | is a flow chart of the Gantry stage orthogonality error compensation method for homing processing according to an example embodiment of the present invention. |

The same reference numbers indicate the same or similar structural components throughout the Figures.

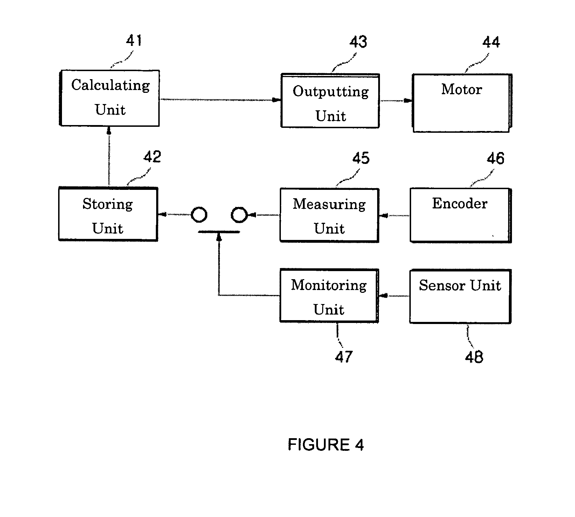

In referring to Figures 4 to 9, Gantry stage orthogonality errors are measured through the use of a pair 2 of linear encoders and homing processing sensors or else through the use of the index signals of linear encoders.

In order to measure orthogonality errors through the use of homing processing sensors or the index signals of linear encoders, the set position coordinates of these sensors respectively set on the master axis and slave axis are preliminarily measured.

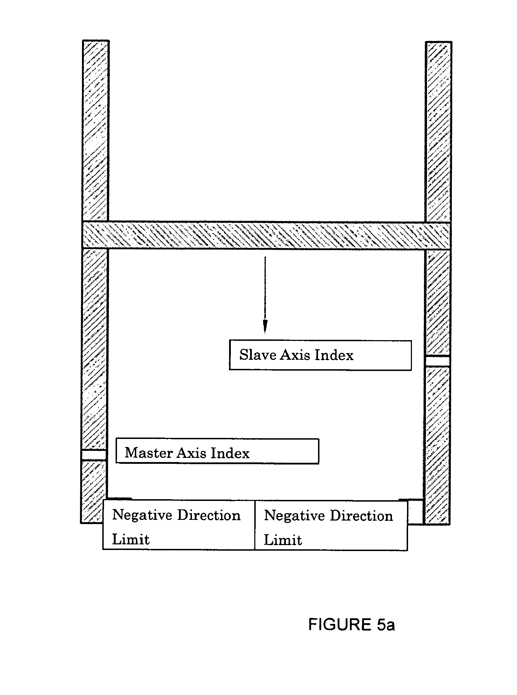

In the measurement method, the current positions of motors 44 of the master axis and the slave axis are respectively recorded in storing unit 42 under conditions that match the Gantry stage orthogonality as a priority. Motors 44 of the master axis and the slave axis are then simultaneously driven (as shown in Figure 5a) at low speed in the negative direction (or positive direction) by a driving unit, and the limit sensor position of the negative direction (or positive direction) is searched for, as depicted in Figure 2. This negative direction limit sensor and positive direction limit sensor indicate the maximum range of driving for the stage.

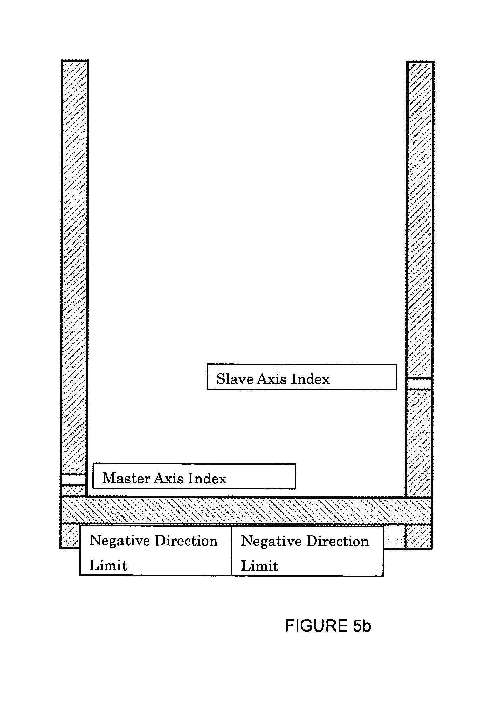

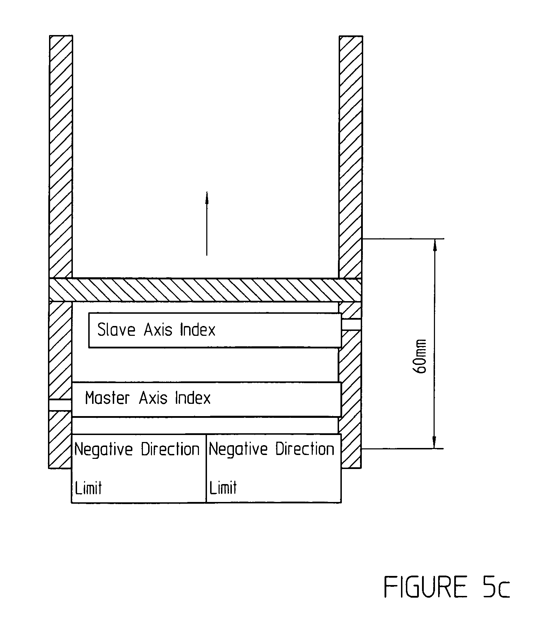

When motors 44 reach the limit sensor position in the negative direction (as depicted in Figure 5b), motors 44 are caused to stop, and motors 44 are then again simultaneously driven at slow speed in the positive direction (or negative direction) (as depicted in Figure 5c). At this time, the sensors for homing processing or the first index signals of encoders 46 on the master axis and slave axis are respectively monitored by monitoring unit 47. When the signal is detected by monitoring unit 47, the position of the sensor of sensor unit 48 is measured by measuring unit 45, and this is stored in storing unit 42.

Calculation unit 41 uses the respective stored position values of these motors 44 to calculate the distance from where motors 44 begin to move to where the sensor position is detected, and the difference between the two calculated distance values is again calculated.

The values calculated in this manner indicate the degree to which the positions of the sensors for homing processing or the index of the slave axis have dropped, based on the perpendicular directional shape standard from the positions of the sensors for homing processing or the index of the master axis relative to the Gantry driving direction of the Gantry stage (referred to as orthogonality position offset). Further, the values calculated in this manner are transmitted to motors 44 through output unit 43, thereby providing compensation for the orthogonality errors.

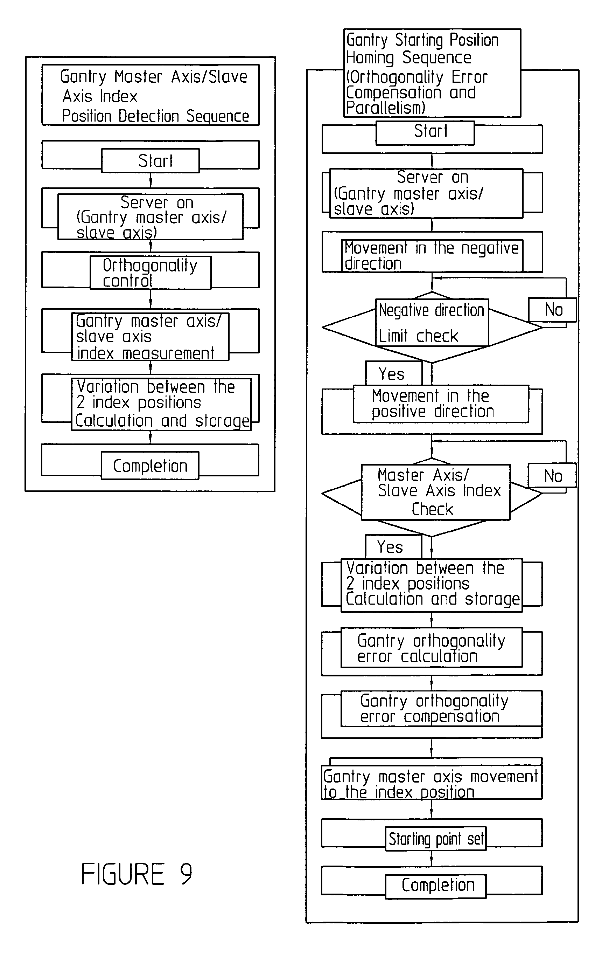

The sequence of the Gantry stage orthogonality error compensation method for homing processing is as depicted in Figure 9.

The above methods are expressed in formulaic form as follows.

Distance YR from the initial position at which the motor of the master axis begins to move to the position of the homing processing sensor or index is expressed as:

$$YR = YR\_S - YR\_E \qquad \{\text{Formula 1}\}$$

YR: distance between an initial position where a motor installed at a master shaft starts to move and a position where a homing sensor is or an index position is

YR_S: an encoder value at a position where a motor installed at a master shaft starts to move

YR_E: an encoder value at a position where a homing sensor installed at the master shaft is

The initial position at which the motor of the slave axis begins to move to the position of the homing processing sensor or index is expressed as follows:

$$YL = YL\_S - YL\_E \qquad \{\text{Formula 2}\}$$

YL: distance between an initial position where a motor installed at a slave shaft starts to move and a position where a homing sensor is or an index position is

YL_S: an encoder value at a position where a motor installed at a slave shaft starts to move

YL_E: an encoder value at a position where a homing sensor installed at the slave shaft is

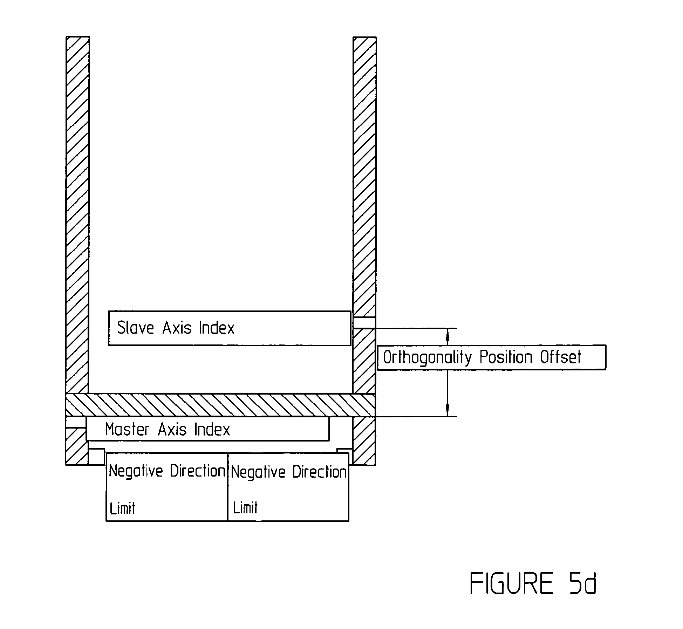

Orthogonality position offset YO calculated through these values (as depicted in Figure 5d) is expressed as follows:

$$YO = YR - YL \qquad \{\text{Formula 3}\}$$

YO: orthogonality position offset

YR: distance between an initial position where a motor installed at a master shaft starts to move and a position where a homing sensor is or an index position is

YL: distance between an initial position where a motor installed at a slave shaft starts to move and a position where a homing sensor is or an index position is

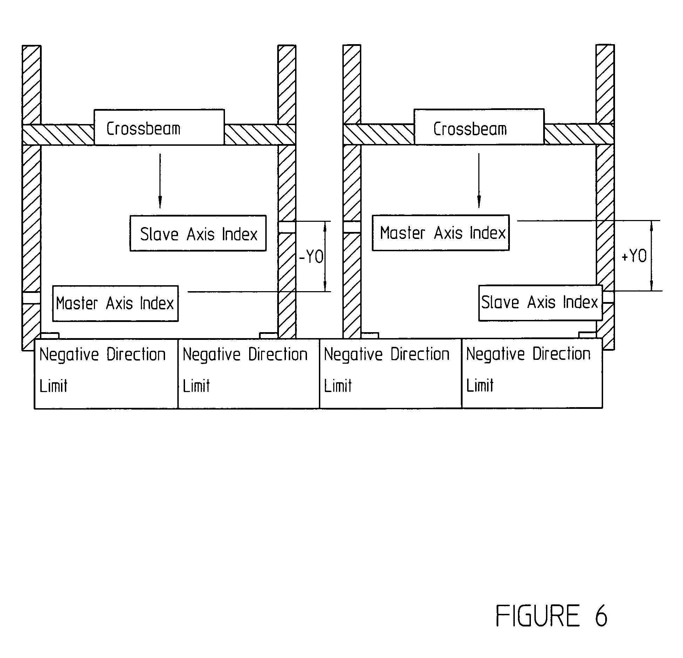

For the symbol used to indicate orthogonality position offset, as noted on the left side of Figure 6, when the position of the homing processing sensor or the encoder index on the master axis is set farther than the position of the homing processing sensor or the encoder index on the slave axis in the negative directional position relative to the driving direction of the Gantry axis, the negative (-) symbol is used, and when the position of the homing processing sensor or the encoder index on the master axis is set farther than the position of the homing processing sensor or the encoder index on the slave axis in the positive directional position relative to the driving direction of the Gantry axis, the positive (+) symbol is used.

The orthogonality position offset value becomes the manufactured inherent value of the Gantry stage. This value is referenced as the standard orthogonality coordinate value at the time that records are stored in the storing unit or when orthogonality errors are measured.

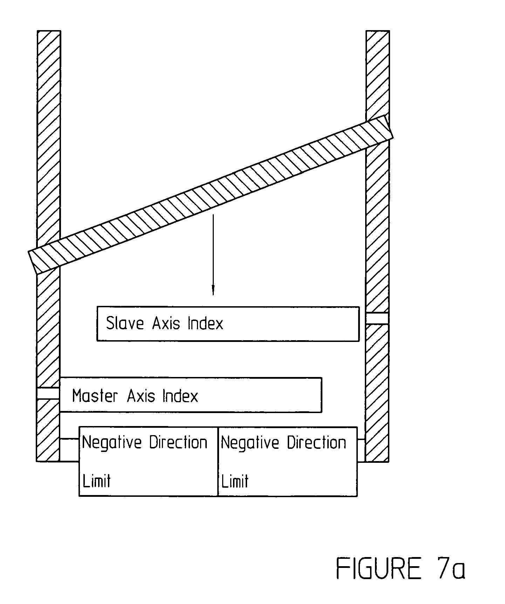

The positions of the motors on the master axis and the slave axis of the Gantry stage are placed in a state in which the orthogonality is twisted, as depicted in Figure 7a, in an arbitrary position of the Gantry driving direction due to design tolerances as well as processing and assembly errors.

In order to compensate for such orthogonality errors when returning to the starting point, two methods are below.

First is a method in which homing processing is respectively conducted of the master axis and the slave axis in a separate manner (applicable when synchronous control or command following methods are utilized).

Second is a method in which homing processing of the master axis and slave axis is simultaneously conducted (applicable when the cross couple gantry control algorithm is utilized).

When the first method is used, the servo amp of the slave axis is maintained in a prerun state. Subsequently, only the motor of the master axis is used for driving at a slow speed in the negative direction (or positive direction) and the limit sensor position in the negative direction (or positive direction) is searched for.

When the motors reach the limit sensor position in the negative direction, the motors are caused to stop, and are then again simultaneously driven at slow speed in the positive direction (or negative direction). At this time the sensors for homing processing or the first index signals of the encoders on the master axis are monitored by the monitoring unit. When the signals are detected by the monitoring unit, the positions of the sensors are measured by the sensor unit and stored in the storage unit.

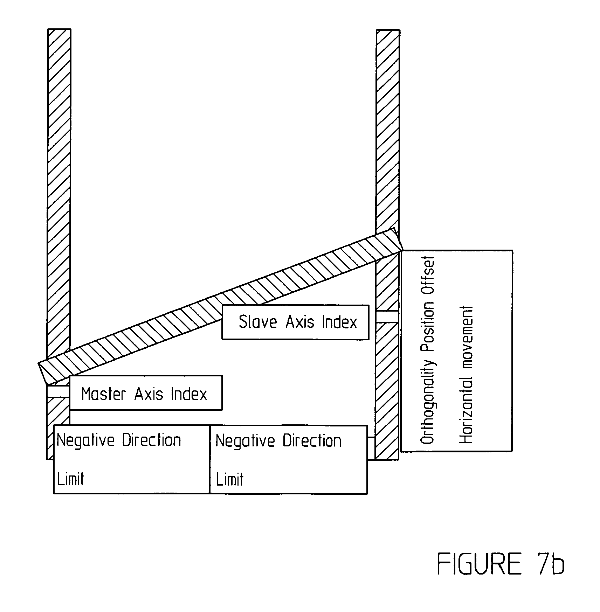

After the motors are caused to move to the position of the sensor stored in the manner noted above, the driving unit sets this position as the starting point, as noted in Figure 7b.

As noted above, after homing processing of the master axis is conducted, homing processing of the slave axis is then conducted according to the identical method.

For example, the servo amp of the master axis is maintained in a prerun state. Subsequently, only the motor of the slave axis is used for driving at slow speed in the negative direction (or positive direction) and the limit sensor position in the negative direction (or positive direction) is searched for.

When the motors reach the limit sensor position in the negative direction, the motors are caused to stop, and are then again simultaneously driven at slow speed in the positive direction (or negative direction). At this time the sensors for homing processing or the first index signals of the encoders on the slave axis are monitored by the monitoring unit. When the signals are detected by the monitoring unit, the positions of the sensors are measured by the sensor unit and stored in the storage unit.

After the premeasured orthogonality position offset value has been used to set the position relative to the stored sensor position as the starting point on the slave axis, the driving unit sends the master axis and slave axis to the respective starting point positions. Consequently, the orthogonality errors are ultimately compensated for. Further, the starting point position YL_Home on the slave axis is calculated as follows:

$$YL\_Home = YL\_E + YO \qquad \{Formula\ 4\}$$

YL_Home:   starting point position

YL_E:   an encoder value at a position where a homing sensor installed at a slave shaft is

YO:   an orthogonality position offset value of a homing sensor installed at a master/slave shaft

The second method in which the master axis and slave axis are simultaneously driven to conduct homing processing is provided as follows. The degree of preliminary twist in orthogonality compensation is measured according to the same method of measurement as used with the orthogonality position offset described earlier. For example, in the state shown in Figure 7a, the current positions of the master axis and slave axis are respectively recorded in the storage unit. Subsequently, the motors of the master axis and slave axis are simultaneously driven at slow speed in the negative direction (or positive direction) by the driving unit and the limit sensor position in the negative direction (or positive direction) is searched for.

When the motors reach the limit sensor position in the negative direction, the motors are caused to stop, and are then again simultaneously driven at slow speed in the positive direction (or negative direction). At this time, the sensors for homing processing or the first index signals of the encoders on the master axis and slave axis are respectively monitored by the monitor unit. When the signals are detected by the monitor unit, the positions of the sensors are measured by the sensor unit and stored in the storage unit as the encoder signal value.

When the Gantry is driven by the driving unit to the sensor for homing processing or index signal detection position on the master axis, a state is produced as illustrated in Figure 7b.

After reading the motor position on the slave axis, the calculation unit calculates the distance YL_D from the current position to the sensor for homing processing or index signal detection position on the slave axis:

$$YL\_D = YL\_C - YL\_E \qquad \{Formula\ 5\}$$

YL_D:   distance between a current position and a position where a homing sensor installed at the slave shaft is or a position where an index signal is detected

YL_E:   an encoder value at a position where a homing sensor installed at a slave shaft is

YL_C:   an encoder value at a current position of the slave shaft

Orthogonality error YE uses the difference value of YL_D and YO calculated previously in Formula 5 based on the standard of the orthogonality position offset value YO, and is calculated as follows:

$$YE = YO - YL\_D \qquad \{Formula\ 6\}$$

YE:   orthogonality error

YO:   an orthogonality position offset value of a homing sensor installed at a master/slave shaft

YL_D:   distance between a current position and a position where a homing sensor installed at the slave shaft is or a position where an index signal is detected

After a compensation signal is sent to the motor on the slave axis via the driving unit containing the orthogonality error YE distance calculated as noted above, the master axis and slave axis are set at the respective current positions as their starting points; or else, after the starting points have been set at the positions that have been compensated by the error distance, the master axis and slave axis are sent to their starting point positions, thereby completing homing processing in orthogonality error compensation.

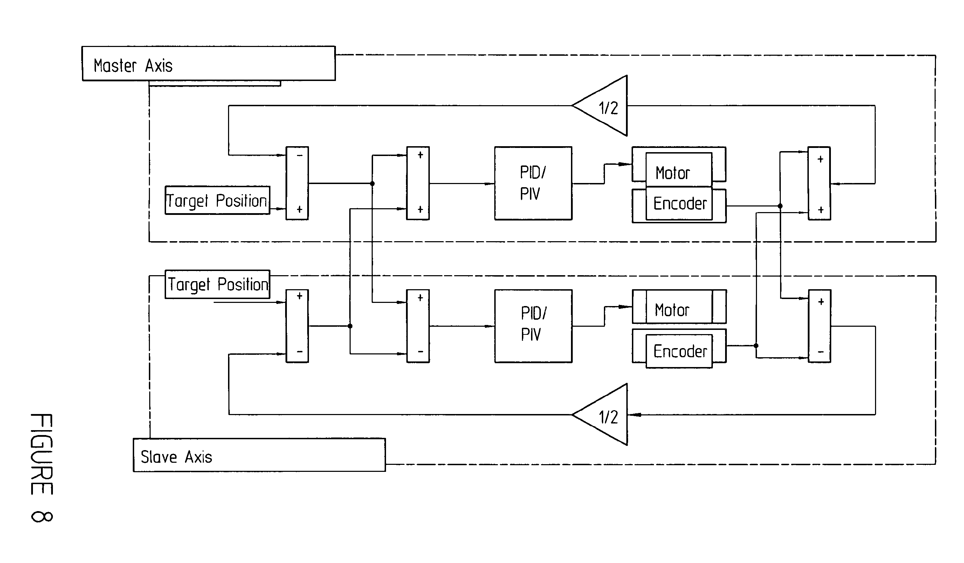

In this process, when the Gantry stage is controlled by using the specialty motion control device by, for example, Motion Engineering, Inc. (MEI), the orthogonality error compensation method explained above must be revised. The real-time torsion error compensation Gantry control algorithm provided by MEI is as illustrated in Figure 8. In conducting Gantry stage homing processing that uses this algorithm, when the slave axis is moved as far as - YE for orthogonality error compensation, the master axis is also moved as far as -YE by the internal Gantry control algorithm. Accordingly, in conducting compensation in this case, if the orthogonality error value is used to compensate one half of the value calculated above (see Formula 6), the master axis compensates for the remaining half. Therefore, the orthogonality error compensation value must be calculated as noted below to complete homing processing in orthogonality error compensation:

$$YE = (YO - YL\_D)/2 \qquad \{Formula\ 7\}$$

YE: orthogonality error

YO: an orthogonality position offset value of a homing sensor installed at a master/slave shaft

YL_D: distance between a current position and a position where a homing sensor installed at the slave shaft is or a position where an index signal is detected

While example embodiments of the present invention have been described above, these example embodiments are not intended to be restrictive but are rather used for the purpose of illustration.

LIST OF REFERENCE NUMERALS

41 Calculation unit

42 Storage unit

43 Output unit

44 Motor

45 Measurement unit

46 Encoder

47 Monitoring unit

48 Sensor unit

**Claims**

1. A Gantry stage orthogonality error measurement method and error compensation method for homing processing **characterized by** comprising

   - a step in which the current motor positions of the master axis and slave axis of the Gantry stage that structurally match an orthogonality are respectively stored;
   - a step in which the motors on the master and slave axis are concurrently driven at low speed in the negative direction (or positive direction) and the limit sensor position in the negative direction (or positive direction) is detected;
   - a step in which, when the motors arrive at the limit sensor position in the negative direction (or positive direction), the motors are caused to stop, and are then driven again simultaneously at low speed in the positive direction (or negative direction), while at the same time the homing sensors of the master axis and slave axis or the first index signal of the encoder are respectively monitored;
   - a step in which, when the homing sensors of the master axis and slave axis or the first index signal of the encoder are detected, the position values of the motors that have detected the absolute position of the homing sensors of the master axis and slave axis or the first index signal of the encoder are stored; and
   - a step in which the stored position value of the motors is used to calculate the distance from the point at which the motors began to move to the position at which the sensor position was detected, the difference in the two calculated distance values is again calculated, and this value is determined to constitute the standard absolute position value of the homing sensor equipped on the Gantry stage, and is stored;
   - this value is then used as the absolute standard position of the homing sensor relative to the orthogonality error at the time of homing processing.

2. A Gantry stage orthogonality error measurement method and error compensation method for homing processing **characterized by**

- conducting a step in which a servo amp of the slave axis is maintained in a prerun state, and thereafter only the motor of the master axis is used for driving at slow speed in the negative direction (or positive direction) and the limit sensor position in the negative direction (or positive direction) is detected;

- conducting a step in which, when the motor reaches the limit sensor position in the negative direction (or positive direction), the motor is caused to stop, and is then again simultaneously driven at slow speed in the positive direction (or negative direction) while the sensor for homing processing or the encoder first index signal on the master axis is monitored;

- conducting a step in which, when the sensor for homing processing or the encoder first index signal on the master axis is detected, the sensor for homing processing or the encoder first index signal on the master axis is measured and stored;

- conducting a step in which the motor is caused to move to the position of the sensor for homing processing or the encoder first index signal on the master axis and this position is then set as the starting point;

- conducting a step in which a servo amp of the master axis is maintained in a prerun state, and thereafter only the motor of the slave axis is used for driving at slow speed in the negative direction (or positive direction) and the limit sensor position in the negative direction (or positive direction) is searched for;

- conducting a step in which, when the motor reaches the limit sensor position in the negative direction (or positive direction), the motor is caused to stop, and is then again simultaneously driven at slow speed in the positive direction (or negative direction) while the sensor for homing processing or the encoder first index signal on the slave axis is monitored;

- conducting a step in which, when the sensor for homing processing or the encoder first index signal on the slave axis is detected, the position of the sensor for homing processing or the encoder first index signal on the slave axis is measured and stored;

- conducting a step in which the motor is caused to move to the position of the sensor for homing processing or the encoder first index signal on the slave axis and this position is then set as the starting point; and

- conducting a step in which the master axis and slave axis are respectively sent to the starting positions; and a step is conducted wherein the slave axis is offset-driven as far as the measured absolute position, the starting point is then set or else the master axis is offset-driven as far as the absolute position, and both axes are thereafter simultaneously sent to the starting position.

3. The method according to claim 2 **characterized** wherein when homing to the starting position is conducted, detection of the position of the limit sensor in the negative direction (or positive direction) and detection of the homing sensors of the master axis and slave axis or the first index signal of the encoder simultaneously drive and detect the Gantry stage.

4. The method according to claim 1 **characterized** wherein in the stage in which the detected orthogonality error is compensated for, the motors in the master axis and the slave axis are respectively driven in a simultaneous manner 1/2 each for the error that needs to be compensated, and the orthogonality error is compensated for.

5. The method according to claim 4 **characterized** wherein when a motion control device is used, in the step in which a comparison is made with the measured absolute position and the slave axis is offset-driven as far as the difference value, the slave axis is only driven 1/2 of the orthogonality error value having to be compensated for, the master axis is then sent to the index position of the sensor for homing processing or encoder, and the orthogonality error is compensated for.

LM Guide

Cross Beam

Base
(frame or granite)

Motor Magnet

Encoder Scale

Cross Beam

Slide

Slide

Base (frame or granite)

FIGURE 1

FIGURE 2

Master Axis    Slave Axis

FIGURE 3

FIGURE 4

FIGURE 5a

Slave Axis Index

Master Axis Index

| Negative Direction Limit | Negative Direction Limit |
|---|---|

FIGURE 5b

FIGURE 5c

Slave Axis Index

Orthogonality Position Offset

Master Axis Index

| Negative Direction | Negative Direction |
| Limit | Limit |

FIGURE 5d

FIGURE 6

FIGURE 7a

Slave Axis Index

Master Axis Index

Orthogonality Position Offset

Horizontal movement

Negative Direction Limit

Negative Direction Limit

FIGURE 7b

FIGURE 8

Gantry Master Axis/Slave
Axis Index
Position Detection Sequence

Start

Server on
(Gantry master axis/
slave axis)

Orthogonality
control

Gantry master axis/
slave axis
index measurement

Variation between the
2 index positions
Calculation and storage

Completion

Gantry Starting Position
Homing Sequence
(Orthogonality Error
Compensation and
Parallelism)

Start

Server on
(Gantry master axis/
slave axis)

Movement in the negative
direction

Negative direction
Limit check — No

Yes

Movement in the
positive direction

Master Axis/
Slave Axis Index
Check — No

Yes

Variation between the
2 index positions
Calculation and storage

Gantry orthogonality
error calculation

Gantry orthogonality
error compensation

Gantry master axis movement
to the index position

Starting point set

Completion

FIGURE 9